# EUROPEAN PATENT APPLICATION

(11) **EP 0 857 527 A2**
(43) Date of publication of application: **12.08.1998**
(21) Application number: 98101838.5
(22) Date of filing: 03.02.1998
(51) Int. Cl.: B21D 53/78

(54) **A process, machine and rolling apparatus for producing axially symmetric members, in particular pulleys or wheels formed from a disk**

(30) Priority: 04.02.1997 IT TO970084
(71) Applicant: AGLA S.p.A., I-10128 Torino (IT)
(72) Inventor: Bonu' Oscar, 10051 Avigliana (IT)
(74) Representative: Cerbaro, Elena

(57) **Abstract**

A rolling process for the production of axially symmetric members, in particular pulleys (1) or wheels formed from a disk, in which a circular blank (6) is put into rotation about its axis and plastically deformed by means of two rollers (22, 23) having different working profiles working simultaneously on a peripheral portion (30, 30') of the blank (6); one (22) of the rollers (22, 23) is subsequently separated from the peripheral portion (30') of the blank (6) whilst maintaining the other roller (23) in working contact with the peripheral portion (30') thereof.

## Description

The present invention relates to a rolling process for producing axially symmetric members, in particular pulleys or wheels formed from a disk, and to a machine and rolling equipment for performance of this method.

As is known, the radially outer profile of axially symmetric members is normally achieved by successive rolling stages; in particular, plastic deformations are gradually produced on the outer cylindrical surface of a circular blank, for example a flat disk, by means of radial pressure exerted by rollers having different profiles and acting in succession.

From French patent FR 8316814, it is known to produce pulleys having a rectilinear radially outer profile by subjecting a flat disk to two successive rolling statges the first of which is performed by means of a first roll provided with a cylindrical main portion and a radially outer portion tapered towards its peripheral edge in such a way as to form a pointed triangular profile, whilst the second stage is performed by means of a second cylindrical roller having a rectilinear profile. The first roller acts on the peripheral portion of the blank and divides it into two portions projecting axially in opposite directions with respect to a central portion of the blank, whilst the second roller performs a levelling action (or flattening) on the said portions by making the material of these portions flow axially by radial pressure.

This procedure requires relatively long working times and involves, in each rolling stage, rather marked deformations of the material of the blank, with consequent risks of rupture and the formation of cracks. Moreover, the use of a single roller for each rolling stage implies that the roller itself must exert on its own, and in a single contact zone of reduced area, all the load necessary to obtain the desired deformation; therefore, each roller is subjected to rather high stresses which cause it to wear rapidly and in some cases to break.

Likewise, a rolling process is known from Italian patent IT 1261380 in the name of the same applicant, for producing pulleys provided with a plurality of peripheral grooves, in which a circular blank is subjected to a plurality of plastic deformation stages each performed by means of a pair of rollers operating simultaneously on the same peripheral portion of the blank itself. In the initial stages pairs of rollers having different profiles are used, shaped in such a way as to work alternate grooves of the blank, whilst in the final finishing stages pairs of rollers having the same profiles are utilised.
As explained in the patent itself, the use of a pair of rollers in each rolling stage rather than a single roller means that, for the same deformation work produced, lower stresses are caused on the rollers during working.

This procedure however, cannot be used to simultaneously perform two rolling operations normally performed in succession, in that the product obtained at the end of this working would have in part the profile impressed by one of the two rollers and in part a profile impressed by the other roller.

The object of the present invention is to provide a rolling process for producing axially symmetric members, in particular pulleys or wheels formed from a disk, which will be free from the disadvantages connected with the known processes specified above.

The said object is achieved by the present invention in that it relates to a rolling process for the production of axially symmetric members, in particular pulleys or wheels which are performed from a disk, comprising the stages of rotating a circular blank about its axis and plastically deforming the said blank by means of at least two rollers having different working profiles and operating simultaneously on the peripheral portion of the blank itself, characterised in that it includes the further stage of separating a first of the said rollers from the said peripheral portion of the said blank, while maintaining a second of the said rollers operatively in contact with the peripheral portion itself.
The present invention further relates to a rolling machine for producing axially symmetric members, in particular pulleys or wheels formed from a disk, comprising actuator means for driving a circular blank to rotate about its axis, at least one pair of rollers having different profiles and operable to plastically deform a peripheral portion of the said blank, and means for simultaneously activating the said rollers to bring them simultaneously into contact with the said peripheral portion, characterised in that it includes disactivation means operable to separate a first of the said rollers from the said peripheral portion of the said blank whilst maintaining a second of the said rollers operatively in contact with the peripheral portion itself.

The present invention likewise relates to rolling apparatus for producing axially symmetric members, in particular pulleys or wheels formed from a disk, which can be mounted on a rolling machine provided with actuator means for driving a circular blank to rotate about its axis, the said apparatus comprising at least one pair of rollers having different working profiles and operable to deform plastically a peripheral portion of the said blank, and a support member for the said rollers movable along a radial advancing direction with respect to the axis of rotation of the said blank to bring the rollers themselves simultaneously into contact with the said peripheral portion, characterised in that it includes disactivation means operable to separate a first of the said rollers from the said peripheral portion of the said blank whilst maintaining the second of the said rollers operatively in contact with the peripheral portion itself.

For a better understanding of the present invention a preferred embodiment is hereinafter describe purely by way of non-limitative example and with reference to the attached drawings, in which:
Figure 1 is an axial section of a pulley which can be obtained by means of a rolling process according to the present invention;
Figure 2 is a schematic lateral elevation view of a rolling machine according to the present invention, with parts removed for clarity;
Figure 3 is an axial section illustrating a blank starting from which the pulley of Figure 1 is formed by means of the rolling process of the present invention;
Figure 4 is an axial section illustrating the profile of the pulley being worked during the rolling process according to the present invention;
Figures from 5 to 7 illustrate, on an enlarged scale and in schematic side view, a tool for the machine of Figure 2 in different working stages, and the profile of the blank during the course of working in these stages; and
Figure 8 illustrates in partial radial section and on a reduced scale, the rollers used during the rolling process according to the present invention, and the profile of the pulley in the course of working.

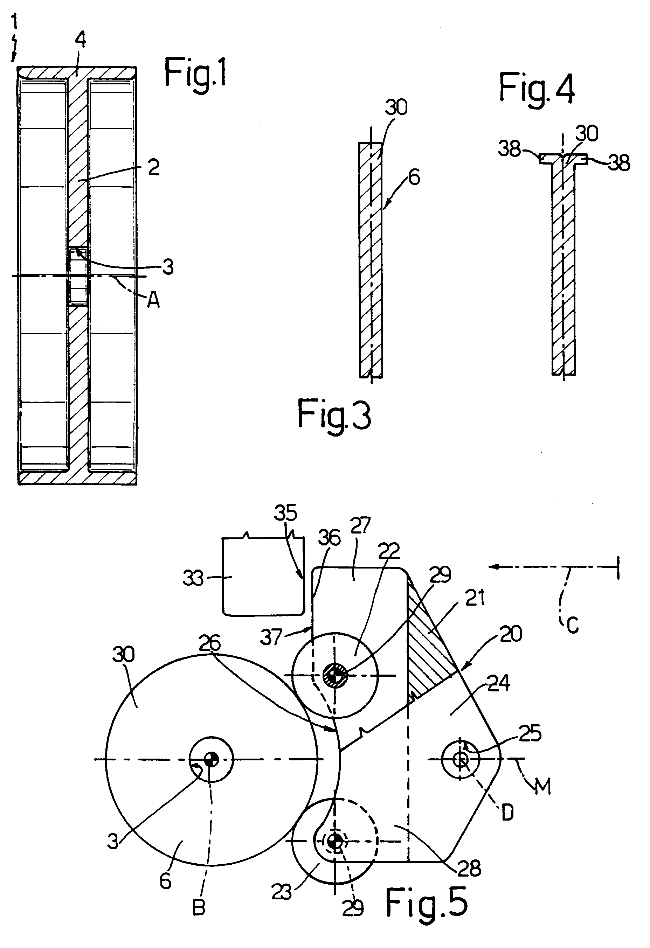

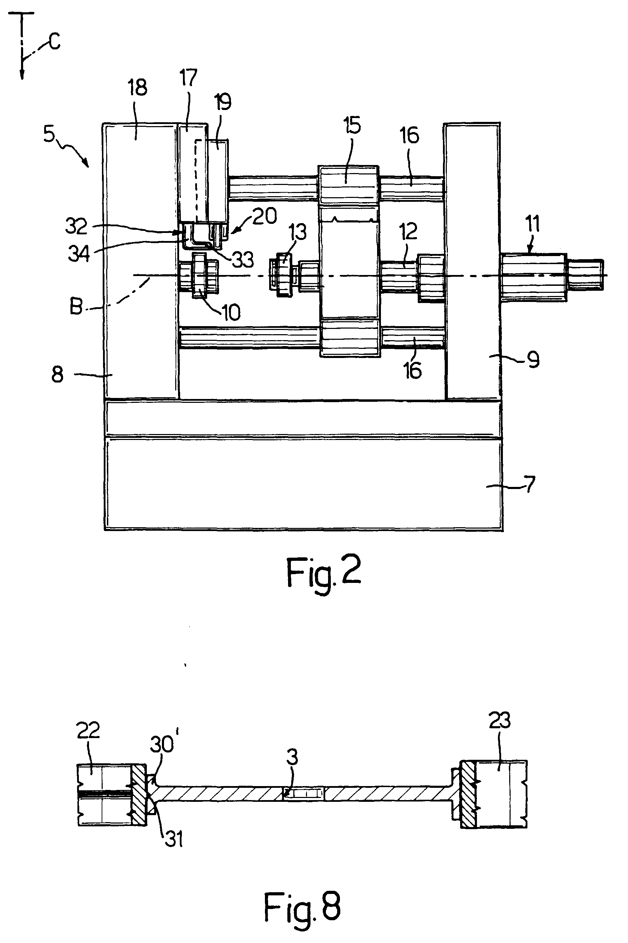

With reference to Figure 1 a pulley obtained with the process according to the present invention is indicated 1.

The pulley 1 has, in axial section, an I-shape section and includes a central portion 2 in the form of a flat disk and provided with a through hole 3 having an axis of symmetry A, and a substantially cylindrical peripheral portion 4 projecting axially in both directions with respect to the portion 2.

With reference to Figure 2, a rolling machine generally indicated 5 is shown for producing the pulley 1 by the process of the present invention and starting from an initial blank 6 in the form of a flat disk illustrated in Figure 3.

The machine 5 essentially comprises a base 7 and a pair of heads 8, 9 extending vertically and projecting from opposite ends of the base 7 itself.

The head 8 supports a mandrel 10 rotatable about a horizontal axis B fixed axially, which is coupled for rotation with motor means, not illustrated, by transmission means of conventional type.

The head 9 supports a hydraulic cylinder 11 coaxial with the mandrel 10 and having an axially slidable stem 12 which carries at its end facing the mandrel 10 a second mandrel 13 movable axially with the stem 12 and mounted freely rotatably thereon.

On the stem 12 there is also rigidly fixed a slide 15 which is axially slidable along three guide columns 16 parallel to the axis B and supported at their ends by the heads 8 and 9 respectively. These columns 16, disposed one below the cylinder 11 and two above and on opposite sides thereof, constitute a guide for the stem 12 and absorb the radial loads bearing on it by the effect of its weight and the working.

The machine 5 further includes a vertical guide element 17 fixedly connected to an upper end portion 18 of the head 8 and an operating head 19 which is movable, during its working stroke, and by the effect of actuator means not illustrated, along the element 17 in a radial advance direction C with respect to the axis B; on the working head 19 there can be mounted a tool 20 of type illustrated in detail in Figures 5 to 7, for performing the rolling process which is the subject of the present invention.

With reference to Figures 1, 5, 6 and 7, the tool 20 essentially comprises a support fork 21 and two substantially cylindrical rollers 22, 23 operable to deform the blank 6 plastically to form the pulley 1 by means of the process which forms the subject of the invention, simultaneously carried into contact with the blank 6 itself by the advancement of the working head 19 in the direction C.

The fork 21 has a rear tapered attachment portion 24 which is pivotable to the working head 19 about an axis D which in use is parallel to the axis B and is provided for this purpose with a hole 25 for housing a pivot pin, not illustrated. The fork 21 further comprises a front support portion 26 for the rollers 22, 23 constituted by a pair of parallel spaced walls 27, 28 which project from the portion 24 and together support, close to respective front edges 37, respective pins 29 of the rollers 22, 23. In more detail, the pins 29 have respective axes parallel to the axes B and D and are disposed symmetrically on opposite sides with respect to a plane M orthogonal to the walls 27 and 28 and passing through the axis D.

The rollers 22, 23 are mounted in such a way as partially to project from the frontal shape of the walls 27, 28 and can thus cooperate with a peripheral portion 30 of the blank 6 mounted between the mandrels 10 and 13 of the machine 5 to transform it into the portion 4 of the finished pulley 1 by passing through an intermediate configuration illustrated in Figure 4 and indicated 30'.

In particular, with reference to Figure 8, the roller 22 is provided on its cylindrical outer surface with a median annular projection 31 having a triangular profile; the roller 23 on the other hand has a rectilinear working profile.

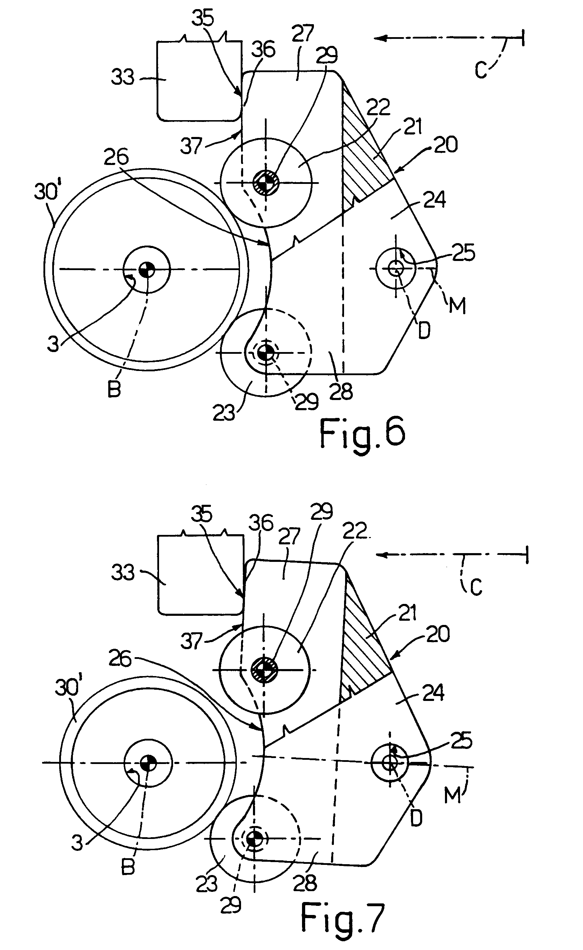

According to the present invention, the machine 5 comprises an L-shape body 32 carried by and projecting from a lower end of the element 17, projecting towards the mandrel 10 and having an abutment portion 33 which is disposed transversely of the direction C in a predetermined position along the working stroke of the operating head 19, which is offset eccentrically with respect to the pivot axis D of the fork 21 and is able to cooperate with the fork 21 itself to rotate it about the axis D causing the separation of the roller 22 from the portion 30' of the blank 6 during the working stroke and maintaining the roller 23 operatively in contact with portion 30' (Figure 7).

In particular, the portion 33 has a substantially flat surface 34 for intercepting the fork 21, which lies parallel to the axis B and is able to cooperate with a substantially flat end portion 36 of the frontal edge 37 of one (27) of the walls 27, 28.

The body 32 further includes a main portion 34 substantially parallel to the direction C, which extends from the lower end of the element 17 and from which the portion 33 extends.

Overall, the tool 20 and the body 32 together define rolling apparatus 40 for producing the pulley 1, which is capable of being mounted on the machine 5.

In use the blank 6 is supplied to the machine 5 by a manipulator (not shown) and positioned on the mandrel 10 in such a way that its axis of symmetry coincides with the axis B; then the blank 6 is clamped by friction between the mandrels 10 and 13 by the action of the hydraulic cylinder 11.

The mandrel 10 is put into rotation and, with the advancement of the operating head 19 along the direction C, the tool 20 is brought into contact with the portion 30 of the blank 6 (Figure 5). For reasons related to the balance of the forces in play, when the tool 20 brings the rollers 22, 23 into contact with the blank 6, the fork 21 assumes a self-centred position, that is to say such as to dispose the rollers 22, 23 in a symmetrical manner on opposite sides of the line joining the axes B and D (Figure 5).

In the first phase of the procedure, the rollers 22, 23 act simultaneously and their combined action causes a progressive transformation of the portion 30 of the blank 6 into the portion 30' of Figure 4. In particular, by means of the projection 31, the roller 22 bears on the portion 30 of the blank 6 and progressively divides it into two sections 38 projecting axially in opposite direction with respect to the remaining part of the blank 6 and having approximately the same volume; simultaneously, thanks to its rectilinear profile and by means of a radial compression action, the roller 23 flattens the section 38 and progressively widens the portion 30' which is in the course of formation (Figure 8).

At an end part of the working stroke of the operating head 19 the fork 21 comes into contact with the portion 33 of the body 32 (Figure 6); during the subsequent advancement of the working head 19, the portion 33 of the body 32 generates on the fork 21 a restraining reaction such as to produce a rotation of the fork 21 about the axis D in a clockwise sense as seen in Figure 7. This rotation causes separation of the roller 22 from the portion 30' of the blank 6 in the course of working and presses the roller 23 with greater pressure into contact with the portion 30' itself in such a way as to complete the flattening action of the section 38 and obtain the finished pulley 1.

The following advantages are evident from the above.

First of all, the process described allows, by means of the rollers 22, 23, two rolling operations normally performed in succession to be performed simultaneously, with relatively short working times and without the finished product having the mark or impression of both rollers 22, 23. In fact, thanks to the interaction between the fork 21 and the portion 33 of the body 32, the roller 22 is separated from the blank 6 during the latter part of the working stroke of the operating head 19, and the roller 23, left in contact with the portion 30', performs the final flattening of the mark left by the roller 22 thereby obtaining an excellent surface finish of the pulley 1.

Moreover, during each revolution about its axis a blank 6 is superficially incised and flattened thanks to the simultaneous action of the rollers 22, 23. Therefore, for the purpose of obtaining the pulley 1 it is sufficient, for each revolution of the blank 6, to perform only a small incision of the peripheral portion 30, 30' in this respect the projection 31 of the roller 22 has decidedly small dimensions. By operating in this way the material constituting the blank is subjected to progressive gradual deformations which reduce the risk of breakage and the formation cracks.

Finally, the use of a pair of rollers rather than a single roller in each rolling stage ensures that, for the same working deformation produced, the stresses on the rollers themselves during the working are decidedly reduced.

Finally, it is clear that the process described, the machine 5 and the apparatus 40 can have modifications and variations introduced thereto which do not depart from the ambit of protection defined by the claims. In particular, the head 8 could support a plurality of working heads 19 disposed radially about the mandrel 10 and provided with respective tools 20; moreover each tool 20 could be provided with a number of rollers greater than two.

Finally, the process described, the machine 5 and the apparatus 40 could be utilised for performing rolling operations on any type of axially symmetric member.

## Claims

1. A rolling process for producing axially symmetric members, in particular pulleys (1) or wheels formed from a disk, comprising the stages of rotating a circular blank (6) about its axis and plastically deforming the said blank (6) by means of at least two rollers (22, 23) having different working profiles working simultaneously on a peripheral portion (30, 30') of the blank (6) itself, characterised in that it comprises the further stage of separating a first (22) of the said rollers (22, 23) form the said peripheral portion (30, 30') of the said blank (6) whilst maintaining a second (23) of the said rollers (22, 23) in operative contact with the peripheral portion (30').

2. A process according to Claim 1, characterised in that the said rollers (22, 23) are mounted on a support member (21) movable in an advancement direction (C) radially with respect to the axis of rotation of the said blank (6) and rockable about a pivot axis D parallel to the axis of rotation of the said blank (6) and respective axes of the rollers (22, 23).

3. A process according to Claim 2, characterised in that the said stage of separating the said first roller (22) from the said peripheral portion (30') of the said blank (6) is performed by intercepting the said support member (21) by means of fixed abutment means (33, 35) disposed transversely of the said adjustment direction (C) of the said support member (21), in an eccentric position with respect to the pivot axis (D) whereby to cause rotation of the support member (21) about the said pivot axis (D) such as to cause separation of the said first roller (22) from the said peripheral portion (30') of the said blank (6) whilst maintaining the said second roller (23) in working contact with the peripheral portion (30').

4. A rolling machine (5) for producing axially symmetrical members, in particular pulleys (1) or wheels formed from a disk, comprising actuator means (10) for causing a circular blank (6) to rotate about its axis, at least one pair of rollers (22, 23) having different working profiles and operable to deform a peripheral portion (30, 30') of the said blank (6) plastically, and activation means (19, 21) for simultaneously activating the said rollers (22, 23) to bring them simultaneously into contact with the said peripheral portion (30, 30'), characterised in that it includes disactivation means (33, 35, D) operable to separate a first (22) of the said rollers (22, 23) from the said peripheral portion (30') of the said blank (6) whilst maintaining a second (23) of the said rollers (22, 23) in working contact with the peripheral portion (30') thereof.

5. A machine according to Claim 4, characterised in that the said activation means include a working head (19) movable, during its working stroke, along an advancing direction (C) radially of the axis of rotation of the said blank (6), and a support member carrying the said rollers (22, 23) and pivotally mounted on the said working head (19) about a pivot axis (D) parallel to the axis of rotation of the said blank (6) and respective axes of the rollers (22, 23).

6. A machine according to Claim 5, characterised in that the said disactivation means comprise fixed abutment means (33, 35) disposed transversely of the said advancement direction (C) in a predetermined position along an end portion of the working stroke of the said working head (19), eccentrically offset with respect to the said pivot axis (D) and cooperable with the said support member (21) to turn it about the said pivot axis (D) thus causing the separation of the said first roller (22) from the said peripheral portion (30') of the said blank (6) and maintaining the said second roller (23) in working contact with the peripheral portion (30') thereof.

7. A machine according to any of Claims 4 to 6, characterised in that the said first roller (22) is provided on its cylindrical outer surface with an annular median projection (31) having a triangular profile, and in that the said second roller (23) has a cylindrical outer surface defining a rectilinear working profile.

8. Rolling apparatus (40) for producing axially symmetric members, in particular pulleys (1) or wheels formed form a disk, which can be mounted on a rolling machine (5) provided with actuator means (10) for putting a circular blank (6) into rotation about its axis, the said apparatus (40) including at least one pair of rollers (22, 23) having different working profiles and acting to deform a peripheral portion (30, 30') of the said blank (6) plastically, and a support member (21) for the said rollers (22, 23) movable along an advancement direction (C) radially of the axis of rotation of the said blank (6) to carry the rollers (22, 23) simultaneously into contact with the said peripheral portion (30, 30'), characterised in that it includes disactivation means (33, 35, D) acting to separate a first (22) of the said rollers (22, 23) from the said peripheral portion (30') of the said blank (6) whilst maintaining a second (23) of the said rollers (22, 23) in working contact with the peripheral portion (30') thereof.
